# EUROPÄISCHE PATENTSCHRIFT

(11) **EP 0 467 831 B1**
(45) Veröffentlichungstag und Bekanntmachung des Hinweises auf die Patenterteilung: **13.04.1994**
(21) Anmeldenummer: 91810525.5
(22) Anmeldetag: 05.07.1991
(51) Int. Cl.: C02F 1/46

(54) **Verfahren und Vorrichtung zur Reinigung und Reinhaltung von Wasser**
Process and apparatus for purification of water and for keeping it clean
Procédé et dispositif pour purifier l'eau et la tenir propre

(30) Priorität: 20.07.1990 CH 2407/90
(43) Veröffentlichungstag der Anmeldung: 22.01.1992
(73) Patentinhaber: FILTRO S.A., CH-1207 Geneve (CH)
(72) Erfinder: Graf, Anton, Genf (CH)
(74) Vertreter: Gachnang, Hans Rudolf

(56) Entgegenhaltungen:
- EP-A- 0 329 562
- EP-A- 0 332 951
- DE-A- 3 121 337
- FR-A- 2 489 806
- US-A- 4 781 805

## Beschreibung

Die Erfindung betrifft ein Verfahren zum Reinigen oder Reinhalten von Nutzwasser gemäss Oberbegriff des Anspruches 1. Sie betrifft weiterhin eine Vorrichtung zur Reinigung oder zum Reinhalten von Nutzwasser unter Anwendung bevorzugter Ausführungsformen des erfindungsgemässen Verfahrens gemäss Anspruch 1.

Die Erfindung ist insbesondere, aber nicht ausschliesslich zur Behandlung von Wasser in Schwimmbecken vorgesehen; andere Anwendungsgebiete sind die Reinhaltung von Kreislaufkühlwasser, die Vorreinigung von Kesselspeisewasser und in manchen Fällen auch von Trinkwasser, das aus Oberflächenwasser gewonnen werden soll. Die Erfindung soll am Problem der Reinhaltung von Schwimmbadwasser erläutert werden, obwohl sie, wie gesagt, nicht darauf beschränkt ist.

Ungereinigtes Schwimmbeckenwasser ist in kurzer Zeit verschmutzt und wird unbrauchbar, selbst wenn es umgewälzt wird. Aus den ins Becken fallenden Stoffen bilden sich grobe und feine Schwemmteile, auf denen sich Bakterien, Algen und Pilze entwickeln.

Es ist üblich, Schwimmbeckenwasser kontinuierlich oder halbkontinuierlich zu filtern und ihm zur Abtötung von Mikroorganismen Chemikalien, z.B. Chlor, Fluor oder Ozon, zuzusetzen. Da dieses Vorgehen auf der Hand liegende Nachteile besitzt, wurde ein elektrochemisches Verfahren bekannt, das in der DE-AI-2 052 974 geoffenbart ist und darin besteht, dass man das Wasser durch eine Zelle leitet, in der aus Metallelektroden unter dem Einfluss einer angelegten Gleichspannung Metallionen freigesetzt werden, die die Verunreinigungen im Wasser zum Ausflocken veranlassen, worauf das Wasser durch ein Filterhilfsmittel geleitet und in das Schwimmbecken zurückgeführt wird.

Als Filterhilfsmittel wird ein Granulat, d.h. in der Regel Sand, verwendet, wobei die Filterwirkung durch den sich aufbauenden, aus den Ausflockungen gebildeten Filterkuchen erzielt wird. Die Granulate haben allgemeinerweise eine Teilchengrösse von etwa 0,4 bis 1,4 mm und können in zwei Schlichten vorliegen.

Verwendet man Kupfer als Elektrodenmaterial, so wird neben der Flockung noch ein bakterizider und algizider Effekt erreicht, der für Kupfer bekannt war.

Dieses Verfahren weist einen entscheidenden Nachteil auf, und zwar beruht dieser auf dem verwendeten Filter. Solche Filter haben, wenn sie neu oder frisch gereinigt sind, zunächst fast keine Filterwirkung. Das Wasser verlässt mechanisch fast ungereinigt das Filter und gelangt so wieder ins Schwimmbecken, und es dauert Tage, bis es einigermassen klar wird. Nach Massgabe des Aufbaus eines porösen Filterkuchens im Sandfilter steigt der Druckverlust und sinkt bei gleicher Pumpenleistung die Durchflussmenge, so dass ein Filter, welches an sich die beste Filterwirkung ausüben würde, den geringsten Durchsatz und damit die geringste Mengen-Filterwirkung aufweist. Das Filter muss regeneriert werden, und die geschilderten Unzulänglichkeiten beginnen von vorn. In der Praxis benötigt man daher unverhältnismässig grosse und schwere Filtereinheiten, für die nicht immer Platz vorhanden ist, sie sind teuer und wegen ihrer Grösse schwierig zu regenerieren.

Aufgabe der Erfindung war es, ein Verfahren und eine Vorrichtung der eingangs genannten Art zu schaffen, die die geschilderten Nachteile nicht aufweisen.

Das erfindungsgemässe Verfahren ist im ersten unabhängigen Patentanspruch definiert. Eine besonders geeignete Vorrichtung zur Verfahrensdurchführung ist Gegenstand des zweiten unabhängigen Patentanspruchs. Besondere Ausführungsformen von Verfahren und Vorrichtung werden von den abhängigen Ansprüchen umfasst.

Aus der DE-3'121'337 ist die Verwendung eines sehr engporigen Membranfilters beschrieben, das zur Reinigung von Trinkwasser dient, und es ist eine Elektrolysezelle vorgesehen, die Desinfektionsmittel auf der Grundlage von Chlor oder Sauerstoff erzeugt. Diese Anlage kann nicht zur Reinigung von Wasser dienen, das feste Verunreinigungen anthält. Ebensowenig ist in der US-A-4'781'805 vorgesehen, feste verunreinigungen aus Wasser abzuscheiden; die Reinigung soll Bakterien und Algen entfernen. In die Gruppe dieser Verfahren und Vorrichtungen gehört auch die EP-A2-0'332'951.

Weiterhin beschreibt die EP-A1-0'329'562 ein Verfahren und eine Vorrichtung zur Behandlung von Wasser, insbesondere Schwimmbadwasser, wobei an Elektroden, die ins Wasser tauchen, eine Spannung nach einem besonderen Programm angelegt wird. Die Elektroden bestehen aus Kupfer oder Silber; die angewandte elektrische Leistung reicht nicht aus, eine Flokkungswirkung im Wasser zu erzielen, sondern soll nur bakterizid und algizid wirken.

Schliesslich betrifft die FR-A-2'489'806 eine Vorrichtung zur Reinigung von Abwasser, d.h. Schmutzwasser, mittels elektrolytischen Behandlung und Filtration

Die vorliegende Erfindung ist zunächst durch die Verwendung eines besonderen Filters, nämlich eines solchen mit mindestens einer Membranfilterpatrone, ausgezeichnet. Dabei ist das Membranfilter im allgemeinen so ausgestaltet, dass es eine möglichst grosse wirksame Oberfläche aufweist; dadurch wird erreicht, dass der Durchfluss des Wassers durch die Gesamtfläche der Membran ein Vielfaches derjenigen im Inneren eines Filterbettes erreicht, und infolge der viel geringeren Strömungsgeschwindigkeit pro Flächeneinheit werden die auszufilternden Niederschläge durch Adhäsion an der sehr grossen spezifischen Oberfläche schon zu Beginn der ersten Filtration wirksam zurückgehalten.

Ein bevorzugt verwendetes Filter ist das Patronenfilter, das den Gegenstand der CH-A-663'158 der Anmelderin bildet und dessen Inhalt Bestandteil der vorliegenden Beschreibung sein soll.

Das die ausgeflockten Niederschläge und andere feste Verunreinigungen enthaltende Wasser gelangt beim Betrieb des genannten Patronenfilters in den zylindrischen Innenraum des senkrecht stehenden zylindrischen Filters und damit von innen an ein inneres Faltenfilterelement, durchströmt es und gelangt durch einen zylinderringförmigen Ringraum in den Ausströmkanal. Gleichzeitig wird ein Teil des zu filternden Wassers von aussen durch ein äusseres Faltenfilterelement ebenfalls in den genannten Ringraum und dann zum Ausströmkanal geleitet. Das Filter ist daher doppeltwirkend und gestattet eine stabile und langdauernde Filtration.

Es wurde nun zusätzlich gefunden, dass die bei den bekannten Verfahren als erforderlich angesehene Verweilzeit zwischen dem Moment der Erzeugung von Schwermetallionen und dem Augenblick der beginnenden Filtration im Filterbett, d.h. eine Ausflockungsverzögerung, nicht notwendig ist und dass die Schwermetallionen, die im der Filtermatte zurückgehalten sind, ihre baktericide und algicide Wirkung weiter behalten.

Dabei wurde weiterhin gefunden, dass es für eine perfekte Reinhaltung des Wassers genügt, wenn nur ein Teil des Wasserstroms mit Schwermetallionen behandelt wird. Näheres geht aus der Beschreibung der neuen Filteranlage hervor.

Die Erfindung soll nun an Hand von Ausführungsbeispielen unter Verweis auf die Zeichnung näher erläutert werden.

In der Zeichnung stellen dar:
- Fig 1: ein vereinfachtes Schema eines allgemeinen Verfahrensablaufs (nicht erfindungsgemäss, was die Ausgestaltung der Filteranlage betrifft);
- Fig. 2: ein Schema des Verfahrensablaufs mit erfindungsgemässer Ausgestaltung der Filteranlage; und
- Fig. 3: einen schematischen Längsschnitt des mit Ionenquelle versehenen Patronenfilters.

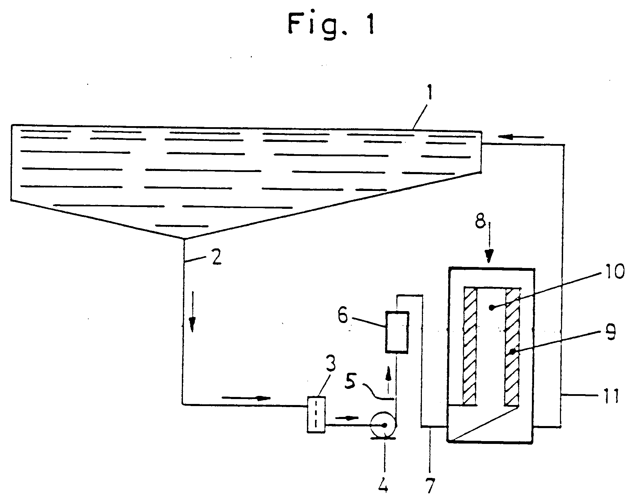

In Fig. 1 ist das Schema des Verfahrensablaufs in seiner allgemeinsten Form aufgezeichnet, wobei aber die Filtereinrichtung nicht gemäss Erfindung ausgeführt ist. Die Fliessrichtung des zu filtrierenden Wassers ist durch Pfeile angegeben.

Aus dem Becken 1, beispielsweise einem Schwimmbassin, fliesst das zu reinigende Wasser durch die Leitung 2 zu einem Vorfilter 3, in dem grobe Verunreinigungen abgeschieden werden. Das vorgefilterte Wasser wird von der Umwälzpumpe 4 durch die Leitung 5 in ein Behandlungsgefäss 6 gedrückt, in dem längliche, nicht gezeichnete Kupferelektroden isoliert angeordnet sind. Diese sind an eine Stromquelle (nicht dargestellt) angeschlossen. Die Kupferelektroden können die Form von Platten haben oder erfindungsgemäss als koaxial verlaufende Rohre vorliegen, insbesondere kann eine rohr- oder stabförmige Innenelektrode von einer rohrförmigen Aussenelektrode umgeben sein. Durch die Leitung 7 gelangt nun das mit Kupferionen behandelte und ausflockende bzw. ausgeflockte Niederschlagsteilchen enthaltende Wasser in den Einlaufstutzen des Patronenfilters 8, das nach der Lehre der CH-A-633 158 konstruiert ist, bzw. in eine entsprechende Filterbatterie. Nach Durchtritt durch die Filtermembran 9 wird das gefilterte Wasser durch die Leitung 11 wieder ins Becken 1 zurückgeleitet.

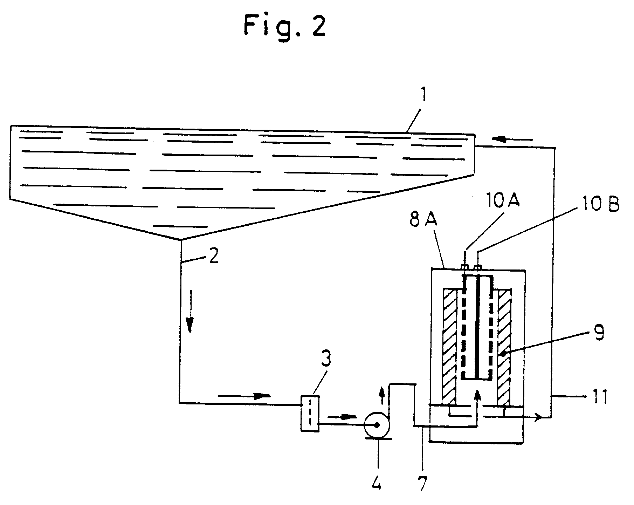

Das Fliessschema gemäss Fig. 2 unterscheidet sich von demjenigen der Fig. 1 dadurch, dass das Ionen-Erzeugungsgefäss 6 weggefallen ist. Dafür befinden sich im oberen Teil des Patronenfilters 8A konzentrische rohrförmige Kupferelektroden 10A, 10B, zwischen denen ein Gleichstrom durch das strömende Wasser fliesst. Ueberraschenderweise reicht der geringe Abstand bis zur Filtermembran 9 aus, um die Verunreinigungen auszuflocken und an der Membran - in der Regel ein kartonartiges Polyestervlies - abzuscheiden, Es wurde beobachtet, dass das nach diesem speziellen Verfahren gereinigte Wasser optisch rein ist. Es wird angenommen, dass die an den Kupferelektroden gebildeten Kupferionen mindestens teilweise durch elektrostatische Kräfte an den Polyesterfasern des Vlieses 9 adsorbiert werden und die gleichzeitige Flockung und Abscheidung der Verunreinigungen auf den Fasern des Filtervlieses bewirken.

Der übrige Verfahrensablauf entspricht demjenigen gemäss Fig. 1.

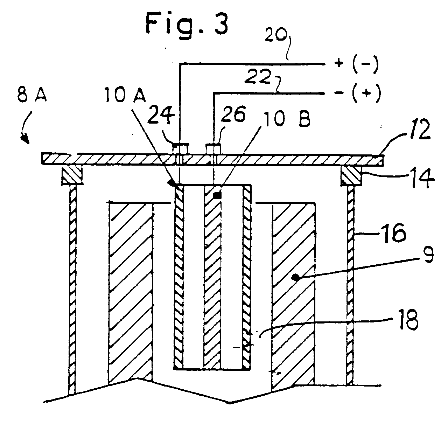

In Fig. 3 ist die neue kombinierte Vorrichtung näher dargestellt. Auf dem zylindrischen Gehäuse 16 des Filters 8A ist unter Zwischenlage einer Dichtung 14 der Deckel 12 angebracht, an dem nach unten ragend die Kupferelektroden 10A und 10B isoliert befestigt sind. Die äussere Elektrode 10A ist ein Rohr, das koaxial die stabförmige Innenlektrode 10B umgibt. Vorzugsweise sind die Massen beider Elektroden etwa gleich gross, damit der laufende Kupferverbrauch beide Elektroden etwa gleichzeitig zu Ende gehen lässt. Die beiden Elektroden 10A, 10B sind bei einer Höhe des Filterelements 9 von 100 bis 150 cm etwa 50 cm lang und ragen daher um ca. 1/3 bis die Hälfte in den inneren Hohlraum 18 des Filterelements 9. Die Zuführungsleitungen 20 und 22, an denen Gleichspannung mit umschaltbarer Polarität von einer nicht gezeichneten Gleichstromquelle anliegt, sind durch Bohrungen des Deckels 12 geführt und mit isolierenden Buchsen 24 bzw. 26 gegen den Deckel isoliert.

Bei einem praktischen Beispiel hatte das Filterelement 9 eine Höhe von 100 cm, einen Aussendurchmesser von 30 cm und einen Innendurchmesser von 10 cm. Die Kupferelektroden hatten eine Länge von 50 cm und wogen 6,8 kg (Aussenelektrode) bzw. 6 kg (Innenelekrode). Die Wasserreinigungsanlage war an ein Schwimmbecken einer Villa geschaltet. Während der warmen Jahreszeit wurde sie 12 Stunden pro Tag, meist in der Nacht, betrieben. Die umgewälzte Wassermenge betrug etwa 20 m³/h. Während 1 bis 2 Stunden pro Tag wurde eine Gleichspannung von maximal 26 V angelegt und alle 2 Minuten die Polarität gewechselt. An den Elektroden wurde eine Nutzspannung von ca. 6 bis 10 V eingestellt. Der Strom wurde auf ca. 1 A eingeregelt.

Nach ca. 5 Monaten wurde das Filter ausgebaut, und die abgelagerte Schlammschicht konnte mit Druckwasser leicht abgespült werden. Die Elektroden hatten jeweils ca. 3,5 kg an Kupfer verloren und wurden ausgewechselt. Während der gesamten Saison behielt das Beckenwasser eine kristallklare optische Reinheit.

Da ein Teil des im Kreislauf geführten Wassers nicht durch die erfindungsgemässe Elektrodenanordnung strömt, wird bevorzugt die Strömung durch die Elektroden gemessen und die Stärke des zwischen den Elektroden fliessenden elektrischen Stroms automatisch derart geregelt, dass bei starker Wasserströmung auch die elektrische Stromstärke erhöht wird und umgekehrt. Auch kann man die optischen Eigenschaften des aus dem Filter strömenden Wassers überwachen und die elektrische Stromstärke in Abhängigkeit von den optischen Messwerten regeln. Es sollen ja gerade nur so viele Kupferionen erzeugt werden, wie sie für die Reinhaltung des Wassers benötigt werden.

Die innere Kupferelektrode 10B liegt bevorzugt als Stab vor, kann jedoch ebenfalls ein Kupferrohr sein.

Weitere Ausgestaltungen des Verfahrens und der Vorrichtung sind im Rahmen der folgenden Patentansprüche möglich. Beispielsweise können die elektrischen Zufuhrleitungen im Inneren des Deckels des Filterelements in einer wasserdichten, von aussen und oben zugänglichen Steckdose enden.

## Patentansprüche

1. Verfahren zum Reinigen und Reinhalten von Nutzwasser, insbesondere in Schwimmbecken, bei dem das Wasser durch elektrische Freisetzung von Schwermetallionen aus entsprechenden Metallelektroden behandelt und ausgeflockte und andere Verunreinigungen dann durch Filtration abgeschieden werden, dadurch gekennzeichnet, dass die elektrische Freisetzung der Schwermetallionen und die anschliessende Filtration in mindestens einer Membranfilterpatrone durchgeführt werden, in derem Inneren die genannten Metallelektroden koaxial angeordnet sind.

2. Verfahren nach Anspruch 1, dadurch gekennzeichnet, dass das reinzuhaltende Wasser im Kreislauf durch das Filter geführt wird.

3. Verfahren nach Anspruch 1 oder 2, dadurch gekennzeichnet, dass das Wasser vor der Zufuhr der Schwermetallionen durch ein Vorfilter geleitet wird, das zur Abscheidung grober Verunreinigungen ausgebildet ist.

4. Verfahren nach einem der vorstehenden Ansprüche, dadurch gekennzeichnet, dass die elektrische Leistung an den Metallelektroden mit der Strömungsgeschwindigkeit des durchströmenden Wassers gleichsinnig geregelt wird.

5. Verfahren nach einem der vorstehenden Ansprüche, dadurch gekennzeichnet, dass an die Metallelektroden, vorzugsweise Kupferelektroden, eine periodisch umgepolte Gleichspannung angelegt wird.

6. Verfahren nach Anspruch 5, dadurch gekennzeichnet, dass die Gleichspannung nur während eines Bruchteils derjenigen Zeitdauer angelegt wird, während derer Wasser im Kreislauf durch das Filter geführt wird.

7. Vorrichtung zur Durchführung des Verfahrens nach einem oder mehreren der vorstehenden Ansprüche, gekennzeichnet durch mindestens ein zylindrisches, in einem Gehäuse stehend angeordnetes Membranfilter in Form einer Filterpatrone mit einem zylindrischen Innenraum, und durch zwei senkrecht in den Innenraum der Filterpatrone ragende Kupferelektroden, die koaxial angeordnet und über Isolierelemente mit einer Gleichstromquelle verbindbar sind.

8. Vorrichtung nach Anspruch 7, weiterhin gekennzeichnet durch eine Pumpe zum Umwälzen des reinzuhaltenden oder zu reinigenden Wassers, und durch ein Grobfilter, das vor dem Membranfilter angeordnet ist.

9. Vorrichtung nach Anspruch 7 oder 8, dadurch gekennzeichnet, dass die Gleichstromquelle mit einem Wendeschalter zum periodischen Umpolen der beiden Kupferelektroden ausgerüstet ist.

10. Vorrichtung nach einem der Ansprüche 7 bis 9, dadurch gekennzeichnet, dass die Gleichstromquelle mit Mitteln zur Konstanthaltung und Einstellung des Elektrodenstroms ausgerüstet ist.

11. Vorrichtung nach einem der Ansprüche 7 bis 10, dadurch gekennzeichnet, dass die Gleichstromguelle mit einer automatischen Vorrichtung zur Regelung des Elektrodenstroms in Abhängigkeit von der durch die Elektroden strömenden zeitlichen Wassermenge ausgerüstet ist.

12. Vorrichtung nach einem der Ansprüche 7 bis 11, dadurch gekennzeichnet, dass die Gleichstromquelle mit einem Zeitschalter zur periodischen Ein- und Ausschaltung des Elektrodenstroms ausgerüstet ist.

## Claims

1. Procedure for purification of industrial water and keeping it clean, especially conceived for swimming-pools. In this procedure water is processed by heavy-metal ions released from metal electrodes. Subsequently, impurities - both those which have conglomerated into flakes and those which have not - are separated through filters. The system is characterised by the fact that the electrical release of heavy-metal ions and the subsequent filtration process take place in at least one cartridge of membrane filters, in which the aforementioned metal electrodes are ordered coaxially.

2. The procedure, according to claim 1 above, is characterised by the fact that the water which one intends to purify, is made to flow in circuit through the filter.

3. The procedure according to claim 1 or 2, is characterised by the fact that water is prefiltered before the introduction of heavy-metal ions. This preliminary step serves to separate the heavier impurities.

4. The procedure is, according to one of the aforementioned claims, characterised by the fact that the electrical power of the metal electrodes is regulated proportionately to the speed of the fluid.

5. The procedure is, according to one of the aforementioned claims, characterised by the fact that a periodically inverted direct current is applied to the electrodes, which will preferably be made of copper.

6. The procedure, is according to claim 5, characterised by the fact that the alternating current is applied for only a fraction of the time during which the water circulates through the filter.

7. The device for the realisation of this procedure is, according to one or several of the aforementioned claims, characterised by the presence of at least one cylindrical encased membrane filter in the form of a filter cartridge with a cylindrical interior, and by two built-in copper electrodes projecting perpendicularly into the interior of the filter cartridge, which are set up coaxially and which can be connected, with adequate electrical isolation, to a DC current source.

8. The device, according to claim 7 above, is further characterised by the presence of a pump, which serves to circulate the water which is to be kept pure or which is to be purified, and by a heavy-impurity filter which is set up before the membrane filter.

9. The device, according to claim 7 or 8 above, is characterised by the fact that the DC source is hooked up to a polarity switch in order to bring about the periodical inversion of poles in the copper electrodes.

10. The device, according to one of the claims from 7 to 9 above, is characterised by the fact that the DC source is provided with means to guarantee the maintenance and regulation of the current on the electrodes.

11. The device, according to one of the claims from 7 to 10 above, is characterised by the fact that the DC source is equipped with an automatic device which regulates the current to the electrodes in proportion to the quantity of water flowing between the electrodes at a given time.

12. The device, according to one of the claims from 7 to 11 above, is characterised by the fact that the DC source is equipped with a switch which serves to connect and disconnect the electrodes periodically.

## Revendications

1. Procédé et dispositif pour purifier l'eau industrielle et la tenir propre, en particulier l'eau des piscines, au cours duquel l'eau est traitée par le dégagement électrique de ions de métaux lourds en provenance d'électrodes métalliques correspondantes, et au cours duquel ensuite les flocons et autres impuretés sont extraites par filtration; le procédé est reconnaissable par le fait que le dégagement électrique des ions des métaux lourds et la filtration finale sont effectués dans au minimum un filtre moléculaire à cartouche, à l'intérieur duquel les électrodes métalliques susmentionnées sont disposées de manière coaxiale.

2. Procédé selon la revendication 1, à ceci reconnaissable que l'eau à tenir propre passe dans le circuit à travers le filtre.

3. Procédé selon la revendication 1 ou 2, à ceci reconnaissable que l'eau, avant l'apport des ions des métaux lourds, passe à travers un premier filtre, conçu pour l'élimination des impuretés les plus grosses.

4. Procédé selon l'une des revendications précédentes, reconnaissable à ceci que la puissance électrique aux électrodes métalliques est réglée uniformément, en fonction de la vitesse d'écoulement de l'eau passant à travers.

5. Procédé selon l'une des revendications précédentes, reconnaissable à ceci que les électrodes métalliques, de préférence des électrodes en cuivre, sont reliées à un courant continu dont les pôles sont périodiquement inversés.

6. Procédé selon la revendication 5, à ceci reconnaissable que le courant continu n'est branché que pendant une fraction de la durée pendant laquelle l'eau passe à travers le filtre dans le circuit.

7. Dispositif rendant possible le fonctionnement du procédé selon l'une ou plusieurs des revendications précédentes, reconnaissable grâce à au moins un filtre moléculaire cylindrique, disposé debout dans un boîtier, sous forme d'un filtre à cartouche avec un espace intérieur cylindrique, et reconnaissable grâce à deux électrodes en cuivre installées perpendiculairement dans l'espace intérieur du filtre à cartouche, disposées de manière coaxiale et pouvant être reliées par des éléments isolants à une source de courant continu.

8. Dispositif selon la revendication 7, reconnaissable en plus grâce à une pompe pour faire circuler l'eau à maintenir propre ou à nettoyer, et reconnaissable grâce à un filtre grossier, qui est placé devant le filtre moléculaire.

9. Dispositif selon la revendication 7 ou 8, reconnaissable à ceci que la source de courant continu est munie d'un inverseur de marche pour l'inversion périodique des pôles des deux électrodes en cuivre.

10. Dispositif selon l'une des revendications 7 à 9, reconnaissable à ceci que la source de courant continu est munie de dispositifs permettant de maintenir constant le courant des électrodes et de le régler.

11. Dispositif selon l'une des revendications 7 à 10, reconnaissable à ceci que la source de courant continu est munie d'un dispositif automatique pour le réglage du courant des électrodes en fonction de la quantité d'eau qui passe à travers les électrodes pendant une période de temps donnée.

12. Dispositif selon l'une des revendications 7 à 11, reconnaissable à ceci que la source de courant continu est munie d'un interrupteur à minuterie pour l'embranchement et le débranchement périodiques du courant des électrodes.
